# EUROPEAN PATENT APPLICATION

(11) **EP 4 769 907 A1**
(43) Date of publication of application: **01.07.2026**
(21) Application number: 25223691.4
(22) Date of filing: 16.12.2025
(51) Int. Cl.: H02K 3/24, H02K 3/48

(54) **STATOR**

(30) Priority: 24.12.2024 JP 2024227215
(71) Applicant: AISIN CORPORATION, Aichi 448-8650 (JP)
(72) Inventor: AKIMORI, So, 448-8650 Kariya (JP); HORIE, Ryuta, 448-8650 Kariya (JP)
(74) Representative: Kramer Barske Schmidtchen Patentanwälte PartG mbB

(57) **Abstract**

A stator (1) includes an annular stator core (10) including a plurality of teeth (11) arranged in a circumferential direction and a plurality of slots (12) formed between the teeth (11) in the circumferential direction, a coil (20) arranged in a slot (12), and an end cover (30) attached to an axial end of the stator core (10), in which the coil (20) is fixed to the end cover (30), and a refrigerant path (12a) that is a flow path of a refrigerant is formed between the coil (20) and the slot (12).

## Description

### TECHNICAL FIELD

The present disclosure relates to a stator.

### BACKGROUND DISCUSSION

Conventionally, a stator in which a coil is arranged in a slot formed in a stator core is known. For example, JP 2015-77040 A discloses a configuration in which an insulator (insulating member) is arranged around a coil arranged in a slot, and the coil and a stator core are insulated from each other by the insulator. JP 2015-77040 A discloses a configuration in which a cuff support component is arranged at an axial end of the stator core, and the cuff support component and a coil end portion are adhered to each other by an epoxy resin.

It is desired to efficiently cool the coil arranged in the slot. In JP 2015-77040 A, for example, as illustrated in Fig. 4, the insulator is arranged around the coil, and there is no refrigerant path for allowing a refrigerant to flow around the slot. Therefore, it has been difficult to efficiently dissipate heat of the coil.

A need thus exists for a stator that efficiently cools a coil arranged in a slot.

### SUMMARY

A stator according to one embodiment includes an annular stator core including a plurality of teeth arranged in a circumferential direction and a plurality of slots formed between the teeth in the circumferential direction, a coil arranged in a slot, and an end cover attached to an axial end of the stator core, in which the coil is fixed to the end cover, and a refrigerant path that is a flow path of a refrigerant is formed between the coil and the slot.

That is, the coil arranged in the slot is fixed to the end cover so that the coil does not move, and as a result, the refrigerant path, which is the flow path of the refrigerant, is fixedly formed between the coil and the slot. According to this configuration, it is possible to efficiently cool the coil arranged in the slot by allowing the refrigerant to flow in the refrigerant path.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a stator;
Fig. 2 is a diagram illustrating the stator as seen in a direction along a central axis Ax;
Fig. 3 is a partially enlarged view of Fig. 2;
Fig. 4 is a diagram illustrating a state in which an end cover and an inner peripheral cover are removed in Fig. 3;
Fig. 5 is a diagram illustrating a state in which a hole is seen in a direction along an axial direction;
Fig. 6 is a cross-sectional view taken along line VI-VI in Fig. 2;
Fig. 7 is a cross-sectional view taken along line VII-VII in Fig. 2;
Fig. 8 is a diagram illustrating a configuration example in which an insulating member is arranged around a coil;
Fig. 9 is a diagram illustrating a configuration example in which the insulating member is arranged around the coil;
Fig. 10 is a diagram illustrating a configuration example in which an insulating member is arranged around the coil;
Fig. 11 is a diagram illustrating a configuration example in which the inner peripheral cover is not provided;
Fig. 12 is a cross-sectional view illustrating a configuration example in which the inner peripheral cover is not provided;
Fig. 13 is a diagram illustrating a configuration example in which a refrigerant hole is not formed on a radially inner side on a terminal cover;
Fig. 14 is a cross-sectional view illustrating a configuration example in which the refrigerant hole is not formed on the radially inner side on the terminal cover;
Fig. 15 is a diagram illustrating a configuration example in which the refrigerant hole is not formed on a radially outer side on the terminal cover;
Fig. 16 is a cross-sectional view illustrating a configuration example in which the refrigerant hole is not formed on the radially outer side on the terminal cover;
Fig. 17 is a diagram illustrating a configuration example in which the coils are gathered radially inward in a slot; and
Fig. 18 is a diagram illustrating a configuration example in which the coils are gathered radially outward in the slot.

### DETAILED DESCRIPTION

Here, embodiments of the present disclosure will be described in the following order.
(1) Configuration of Stator:
(2) Other Embodiments:

### Configuration of Stator:

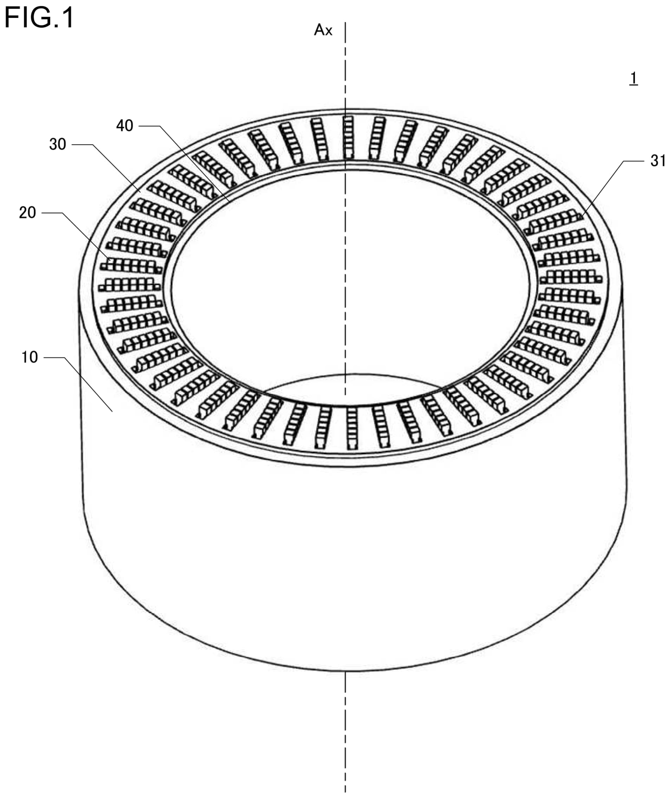

Fig. 1 is a perspective view of a stator 1 according to the present embodiment. The stator 1 includes a stator core 10, a coil 20, an end cover 30, and an inner peripheral cover 40. Note that, in Fig. 1, a coil end portion, which is a portion of the coil 20 that is not accommodated in the stator core 10, is illustrated in a state of being cut in a direction perpendicular to an axial direction.

The stator core 10 according to the present embodiment is an annular member. A rotor not illustrated is arranged inside a ring formed by the stator core 10. The rotor is a member that rotates about a central axis of the ring formed by the stator core 10 as a central axis Ax. In the present specification, a direction parallel to the central axis Ax is referred to as an axial direction, a direction perpendicular to the central axis Ax is referred to as a radial direction, and a rotation direction about the central axis Ax is referred to as a circumferential direction. In the radial direction, a direction away from the central axis Ax is referred to as radially outward, and a direction approaching the central axis Ax is referred to as radially inward.

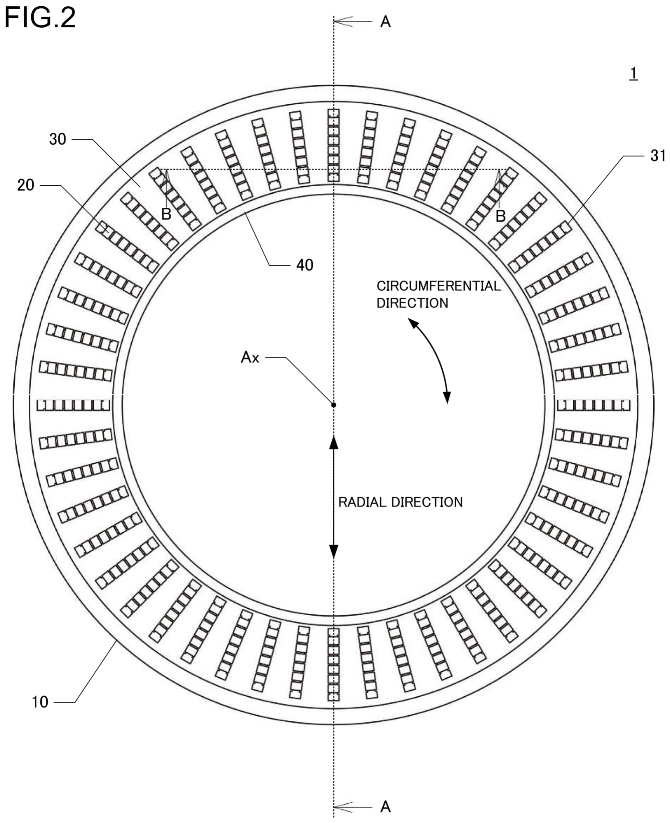

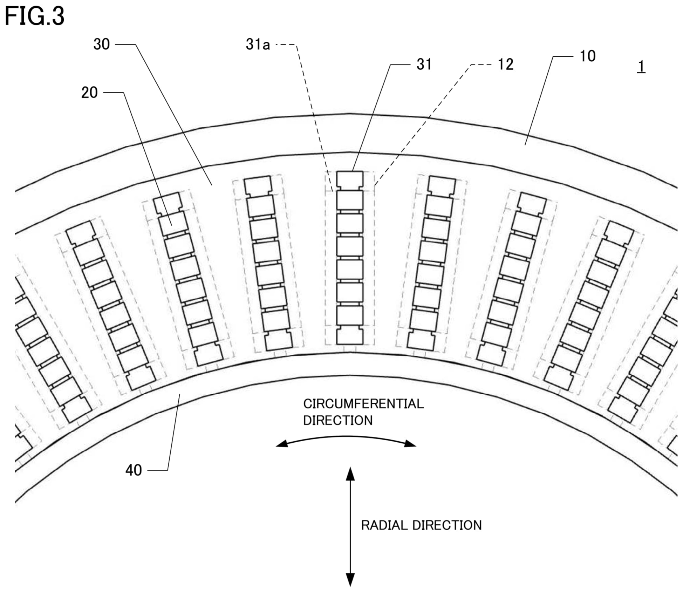

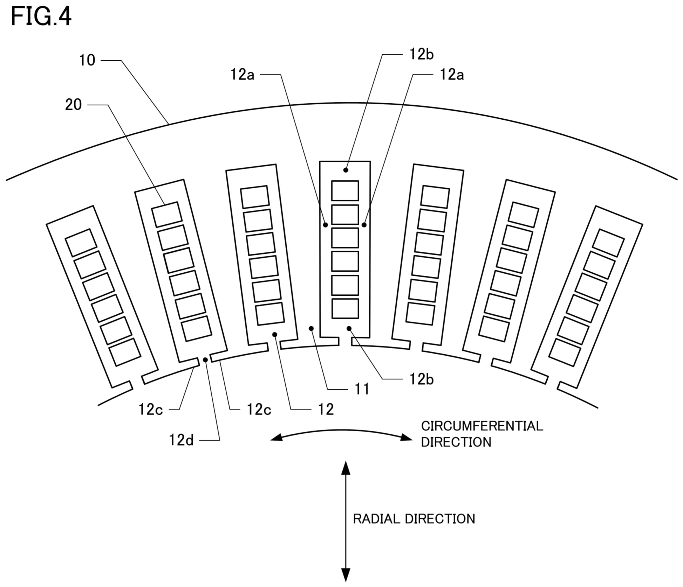

Fig. 2 is a diagram illustrating the stator 1 as seen in a direction along the central axis Ax, Fig. 3 is a partially enlarged view of Fig. 2, and Fig. 4 is a diagram illustrating a state in which the end cover 30 and the inner peripheral cover 40 are removed in Fig. 3.

As illustrated in Fig. 4, the stator core 10 includes a plurality of teeth 11 arranged in the circumferential direction and a plurality of slots 12 formed between the teeth 11 in the circumferential direction. In the present embodiment, the teeth 11 are portions protruding radially inward on a radially inner peripheral side of the stator core 10. The teeth 11 are formed at regular intervals in the circumferential direction on an entire inner periphery of the stator core 10. The number of the teeth 11 may be various. In the present embodiment, a cross-sectional shape of the teeth 11 in the direction perpendicular to the axial direction is the same at any position in the axial direction. Therefore, the teeth 11 are portions that protrude radially inward in the radial direction and extend in the axial direction with the same cross-sectional shape in the direction perpendicular to the axial direction.

A space formed between the teeth 11 in the circumferential direction is a slot 12. The coil 20 is arranged in the slot 12. The number of the coils 20 arranged in the slot 12 in the radial direction is not limited, but is six in the present embodiment. Note that, Fig. 1 and the like illustrate a state in which the coil 20 is cut in the direction perpendicular to the axial direction, and the coil 20 includes an accommodated portion arranged in the slot 12 and the coil end portion protruding in the axial direction from an end face of the stator core 10. Note that, in Fig. 3, a shape of the slot 12 hidden by the end cover 30 is indicated by a broken line.

In the present embodiment, a penetrating portion 12d penetrating radially inward is formed in the slot 12. Specifically, as illustrated in Fig. 4, on the radially inner side, an inner wall of the slot 12 includes a protrusion 12c extending in the circumferential direction, but the protrusions 12c are not connected in the circumferential direction, and the penetrating portion 12d penetrates in the radial direction.

The end cover 30 is a member attached to an axial end of the stator core 10. In the present embodiment, the end cover 30 is a member having an annular outer shape as seen in the axial direction. A diameter of an inner periphery on the radially inner side of the end cover 30 is substantially the same as a diameter of an inner periphery on the radially inner side of the stator core 10. A diameter of an outer periphery on the radially outer side of the end cover 30 is smaller than a diameter of an outer periphery on the radially outer side of the stator core 10. The diameter of the inner periphery and the diameter of the outer periphery are not limited, but a length in a radial direction of the end cover 30 is preferably equal to or longer than a length in the radial direction of the slot 12. Note that, in the present embodiment, the end covers 30 are provided at both ends in the axial direction.

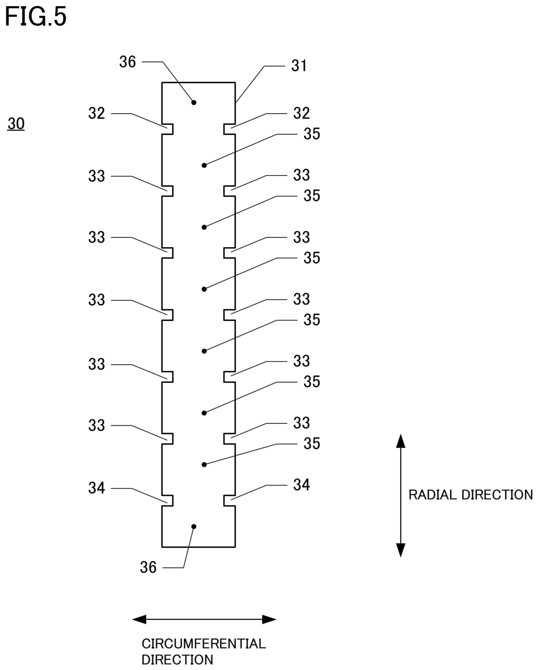

On the end cover 30, a hole 31 through which the coil 20 is inserted is formed. Fig. 5 illustrates a state in which the hole 31 is seen in a direction along the axial direction. A schematic shape of the hole 31 is a rectangle elongated in the radial direction. A long side of the rectangle is longer than the sum of lengths in the radial direction of the coils 20 arranged in the slot 21. A short side of the rectangle is substantially the same as the length in the circumferential direction of the coil 20 arranged in the slot 21. Therefore, when the coil 20 is inserted into the hole 31, the coil 20 does not move in the circumferential direction.

In the present embodiment, the hole 31 includes a plurality of protrusions 32,33, and 34 extending in the circumferential direction formed on a long side in the radial direction. The protrusion 32 is located on a radially outermost side, and the protrusion 34 is located on a radially innermost side. The protrusion 33 is located between the protrusions 32 and 34 in the radial direction.

Each of the protrusions 32, 33, and 34 protrudes from each of two long sides of the hole 31 toward the inside of the hole 31 in the circumferential direction. The two protrusions formed on the two long sides and facing each other in the circumferential direction are formed at the same position in the radial direction. Furthermore, a distance in the radial direction between the protrusions adjacent in the radial direction out of the protrusions 32, 33, and 34 is substantially the same as a distance in the radial direction between the coils 20.

Therefore, the coil 20 can be arranged between the protrusions 32, 33, and 34 adjacent in the radial direction. A hole formed between the protrusions 32, 33, and 34 adjacent in the radial direction is referred to as a coil insertion hole 35. Figs. 1 to 3 illustrate a state in which the coil 20 is arranged in the coil insertion hole 35.

In a state in which the coil 20 is inserted into the coil insertion hole 35 and the end cover 30 is in contact with the axial end of the stator core 10, each coil 20 is fixed to the end cover 30. A method of fixing the coil 20 is not limited, but in the present embodiment, the coil 20 and the end cover 30 are fixed by adhesion. According to this configuration, the coil 20 and the end cover 30 can be fixed with a simple configuration. An adhesive is not limited as long as this can fix the coil 20 and the end cover 30. For example, an epoxy resin and the like can be adopted.

In the present embodiment, a plurality of coils 20 arranged in the slot 12 is included in the slot 12 in a plane in the direction perpendicular to the axial direction. That is, in the direction perpendicular to the axial direction, all of cross sections of the plurality of coils 20 are present inside a line forming an outer periphery of a cross section of the slot 12. In the present embodiment, a length in the radial direction of the hole 31 of the end cover 30 is substantially the same as the length in the radial direction of the slot 12 as illustrated in Fig. 3. In contrast, a length in the circumferential direction of the hole 31 of the end cover 30 is shorter than the length in the circumferential direction of the slot 12, and the hole 31 is present at the center of the slot 12 in the circumferential direction. Therefore, the coil 20 is fixed to the end cover 30, so that a gap is formed between the coil 20 and the inner wall of the slot 12 on both sides in the circumferential direction of the coil 20 as illustrated in Fig. 4. The gap serves as a refrigerant path 12a that is a flow path of a refrigerant.

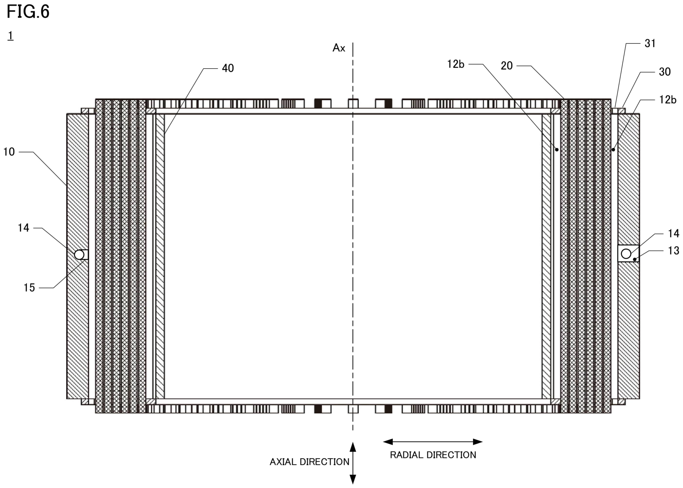

In the present embodiment, the coil 20 is arranged to be separated from both the radially outer side and the radially inner side of the hole 31 and fixed. That is, the coils 20 are fixed in a state of being gathered to the radial center of the hole 31. Therefore, the coil 20 is fixed to the end cover 30, so that a gap is formed between the coil 20 and the inner wall of the slot 12 on both sides in the radial direction of the coil 20 as illustrated in Fig. 4. The gap serves as a refrigerant path 12b that is a flow path of a refrigerant. Fig. 6 is a cross-sectional view taken along line VI-VI in Fig. 2. As illustrated in Fig. 6, the refrigerant path 12b is formed on the radially inner side and radially outer side of the coil 20, and extends in the axial direction.

The refrigerant paths 12a and 12b each serve as a space that is the flow path of the refrigerant. Therefore, in the present embodiment, the inner peripheral cover 40 is provided such that the refrigerant can flow in the refrigerant paths 12a and 12b. The inner peripheral cover 40 is a cylindrical member, and has a length in the axial direction substantially the same as a length in the axial direction of the stator core 10. A diameter of an outer peripheral surface on the radially outer side of the inner peripheral cover 40 is substantially the same as a diameter of an inner peripheral surface on the radially inner side of the stator core 10. As illustrated in Figs. 1, 2, 3, and 6, the inner peripheral cover 40 is fitted on the radially inner side of the stator core 10 to be used. Since the inner peripheral cover 40 is a plate-shaped member and exists over the entire inner periphery of the stator core 10, this closes the penetrating portion 12d of the slot 12. As a result, the refrigerant flowing through the refrigerant paths 12a and 12b can be prevented from leaking radially inward via the penetrating portion 12d.

As described above, in the present embodiment, the refrigerant paths 12a and 12b are formed over an entire periphery of the coil 20 in the plane perpendicular to the axial direction. The refrigerant is supplied to the refrigerant paths 12a and 12b formed in each slot 12 by various methods. In the example illustrated in Fig. 6, a hole 13 extending in the radial direction is formed at the axial center of the stator core 10. The hole 13 penetrates from a radially outer periphery of the stator core 10 to an inner wall on the radially outer side of the slot 12. When the refrigerant is supplied from the outside of the stator core 10 to the hole 13, the refrigerant is supplied into the slot 12.

Therefore, an opening where the hole 13 opens on the inner wall of the slot 12 serves as a supply port for supplying the refrigerant to the slot 12. When the refrigerant is supplied from the supply port, the refrigerant moves to the axial end side through the refrigerant paths 12a and 12b, and is discharged from the hole 31 as a refrigerant discharge port. According to the above-described configuration, the coil 20 and the stator core 10 can be cooled by supplying the refrigerant from the center in the axial direction to the slot 12 and allowing the refrigerant to flow toward both ends in the axial direction. According to this configuration, as compared with a configuration in which the refrigerant is supplied from one end in the axial direction to the slot 12 and discharged from the other end, it is possible to reduce a pressure required for allowing the refrigerant to flow.

Note that, various configurations can be adopted as a configuration for supplying the refrigerant to each of the plurality of slots 12 in the circumferential direction. In the example illustrated in Fig. 6, an example is illustrated in which a refrigerant path 14 over an entire periphery in the circumferential direction is connected to the hole 13, and a refrigerant path 15 extending in the radial direction from the refrigerant path 14 and connected to each slot 12 is further formed. According to this configuration, it is possible to allow the refrigerant to flow in the circumferential direction from the hole 13 through the refrigerant path 14 and further allow the refrigerant to flow to each slot 12 through the refrigerant path 15. Note that, although the hole 13, the refrigerant path 14, and the refrigerant path 15 are present at the center in the axial direction of the stator core 10, the configuration is not limited to the configuration in which they are present at strictly the center positions in the axial direction. That is, the hole 13, the refrigerant path 14, and the refrigerant path 15 may be formed at positions displaced from the center in the axial direction.

According to the configuration described above, the refrigerant supplied from the outside of the stator core 10 to the inside of the stator core 10 and reached the slot 12 flows in the refrigerant paths 12a and 12b in the axial direction along the coil 20. Since the refrigerant is in direct contact with the coil 20, the coil 20 arranged in the slot can be efficiently cooled. In the present embodiment, the coil 20 is fixed by the end cover 30, and the refrigerant paths 12a and 12b are formed over the entire periphery of the coil 20 between the coil 20 and the slot 12, so that the coil 20 does not come into contact with the slot 12. Therefore, even if a sheet-shaped insulating member is omitted, the coil 20 and the slot 12 can be insulated from each other.

As described above, in the present embodiment, the long sides of the hole 31 are fixed to both sides in the circumferential direction of the coil 20, so that the position of the coil 20 is fixed in the slot 12. In the present embodiment, a structure for facilitating the fixing is formed on the end cover 30. Specifically, the end cover 30 includes an engaging portion 31a that extends to the stator core 10 side in the axial direction and engages with the slot 12.

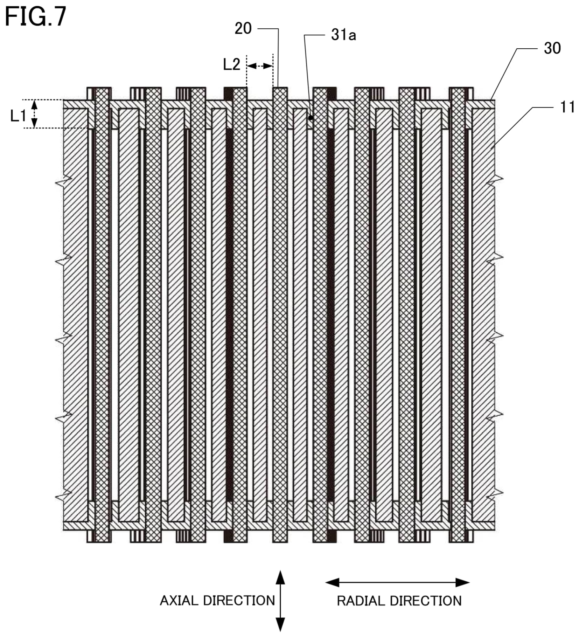

Fig. 7 is a cross-sectional view taken along line VII-VII in Fig. 2. As illustrated in Fig. 7, the end cover 30 includes the engaging portion 31a, which is a plate-shaped portion extending from a long side portion of the hole 31 to the stator core 10 side in the axial direction. A length L1 of the engaging portion 31a in the axial direction is set to a length by which the engaging portion 31a is fitted to an end of the slot 12 in the axial direction, and in the present embodiment, this is substantially the same as a length L2 of the hole 31 in the radial direction. Note that, it is only required that the engaging portion 31a is set to have a length fitted to the end in the axial direction of the slot 12, and the length thereof is not limited. In any case, the engaging portion 31a is fitted to the end in the axial direction of the slot 12, so that the engaging portion 31a can easily position the end cover 30.

The length in the radial direction of the engaging portion 31a is substantially the same as a length in the radial direction of a portion in which the plurality of coils 20 is arranged (refer to Fig. 3). Therefore, in the radial direction, the engaging portion 31a is in contact with each coil 20 at both ends in the circumferential direction of each of the plurality of coils 20. In the above-described configuration, an area of a portion in which the end cover 30 and the coil 20 are in contact with each other at both ends in the circumferential direction is larger than that in a state in which the engaging portion 31a is not present. Therefore, the coil 20 can be easily adhered to the end cover 30.

As described above, the protrusions 32, 33, and 34 are formed in the hole 31 of the end cover 30 according to the present embodiment. The protrusion 33 is located between the coils 20 adjacent in the radial direction. In the example illustrated in Fig. 5, since the number of coils 20 adjacent in the radial direction is six, there are five boundaries between the coils, and the protrusion 33 is inserted into each boundary. When the protrusion 33 is arranged between the adjacent coils 20, the adjacent coils 20 are separated from each other in the radial direction by a width in the radial direction of the protrusion 33. Therefore, in the present embodiment in which the protrusion 33 is present, a gap is generated between the coils 20 in the radial direction, and it is possible to allow the refrigerant to flow between the coils 20. Therefore, the coil 20 can be cooled more efficiently. The length in the circumferential direction and the length in the radial direction of the protrusion 33 are not limited, and it is sufficient that they are set so that the refrigerant can flow in a space generated by separating the adjacent coils 20. Note that, in the present embodiment, since the protrusions 33 are not connected in the circumferential direction, a hole is formed in a portion interposed by the protrusions 33. The refrigerant can be discharged from the hole.

The protrusion 32 is formed in a position in contact with a surface on the radially outer side of the coil located on the radially outermost side. In the present embodiment, the hole 31 extends further radially outward than the protrusion 32. Therefore, according to the protrusion 32, it is possible to position such that the coil 20 located on the outermost side in the radial direction does not move radially outward in the hole 31. According to this configuration, the hole is formed on the radially outer side of the protrusion 32.

The protrusion 34 is formed in a position in contact with a surface on the radially inner side of the coil located on the radially innermost side. In the present embodiment, the hole 31 extends further radially inward than the protrusion 34. Therefore, according to the protrusion 34, it is possible to position such that the coil 20 located on the innermost side in the radial direction does not move radially inward in the hole 31. According to this configuration, the hole is formed on the radially inner side of the protrusion 34.

Since the hole located on the radially outer side of the protrusion 32 and the hole located on the radially inner side of the protrusion 34 are present on the end cover 30 as through-holes, the holes become refrigerant holes 36 through which the refrigerant passes. Since the refrigerant hole 36 is formed in this manner, the refrigerant flowing in the slot 12 and discharged from the opening at the axial end of the slot 12 further passes through the refrigerant hole 36 of the end cover 30 and is discharged to the outside of the stator core 10. Therefore, the refrigerant can be efficiently circulated as compared with a configuration in which the refrigerant hole 36 does not exist.

### (2) Other Embodiments:

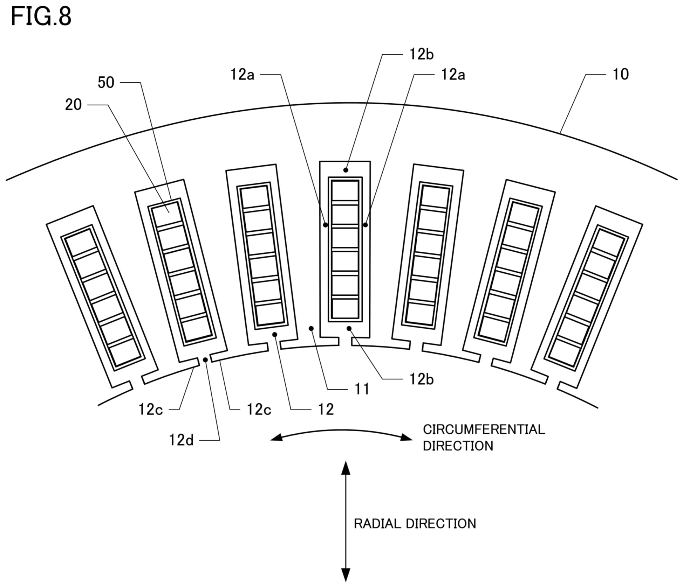

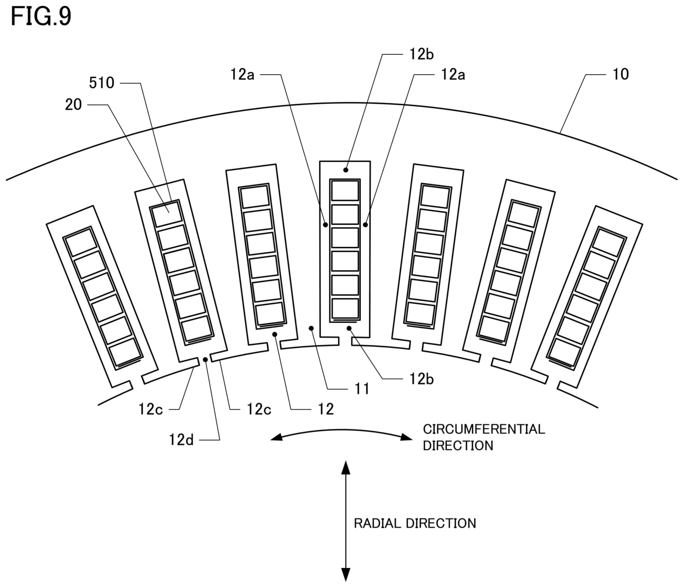

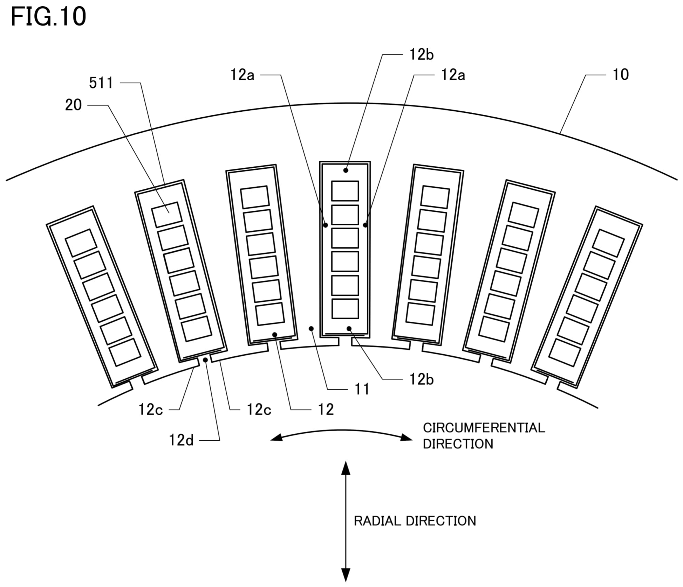

The above-described embodiment is an example for carrying out the present disclosure, and various other embodiments can be adopted. For example, the slot 12 and the coil 20 may be insulated by an insulating member. Fig. 8 illustrates a configuration in which an insulating member 50 is arranged around the coil 20 as seen in the same direction as in Fig. 4. In the configuration illustrated in Fig. 8, the configuration other than the insulating member 50 is similar to that of the above-described embodiment. In Fig. 8, the configuration similar to that of the above-described embodiment is denoted by the same reference numeral as that in the above-described embodiment. In this manner, the use of the insulating member 50 enables more reliable insulation between the coil 20 and the slot 12. An aspect of the insulating member is not limited to the aspect illustrated in Fig. 8. For example, as illustrated in Fig. 9, insulation paper 510 may be wound around the coil 20, or as illustrated in Fig. 10, insulation paper 511 may be arranged along the inner wall of the slot 12.

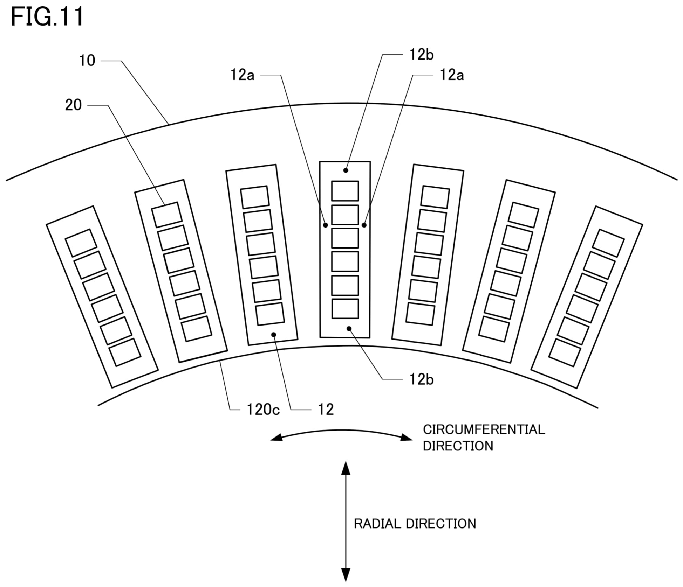

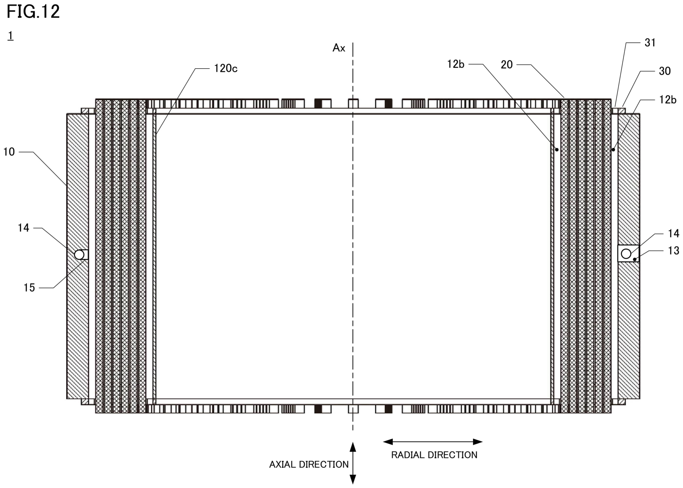

Moreover, a configuration in which the refrigerant path is formed in the slot 12 without providing the inner peripheral cover 40 may be adopted. Fig. 11 illustrates an example of a configuration in which the inner peripheral cover 40 is not provided as seen in the same direction as in Fig. 4, and Fig. 12 is a cross-sectional view similar to Fig. 6. In the example illustrated in Figs. 11 and 12, on the radially inner side of the slot 12, the penetrating portion 12d is not formed in the stator core 10, and an inner wall 120c not penetrated over an entire periphery in the circumferential direction is formed. According to this configuration, it is possible to allow the refrigerant to flow inside the refrigerant paths 12a and 12b without using the inner peripheral cover 40.

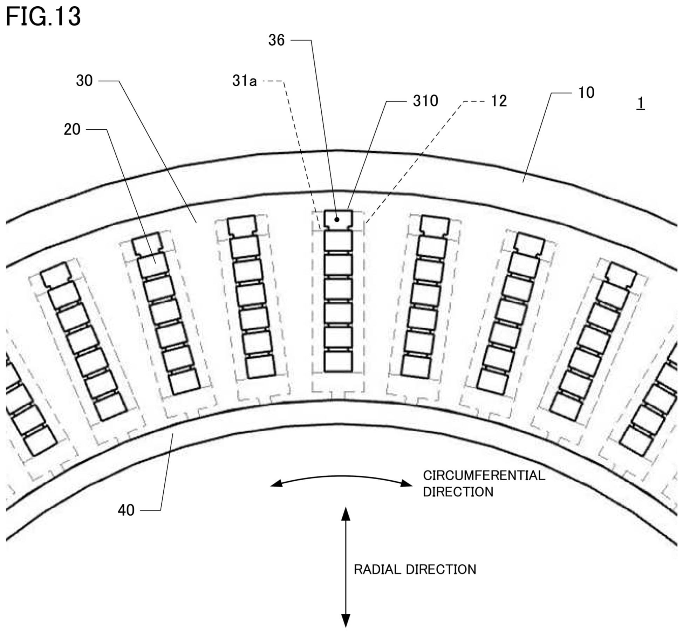

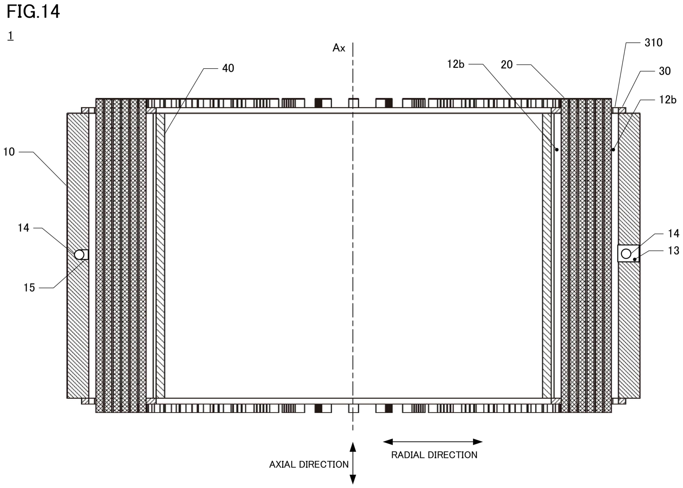

Furthermore, the shape of the hole 31 is not limited to the shape in the above-described embodiment. For example, the refrigerant hole 36 may be formed on either one of the radially outer side and the radially inner side. Fig. 13 illustrates an example of a configuration in which the refrigerant hole 36 is not formed on the radially inner side but is formed on the radially outer side in the end cover 30 as seen in the same direction as in Fig. 3, and Fig. 14 is a cross-sectional view similar to Fig. 6. In Figs. 13 and 14, the configuration similar to that of the above-described embodiment is denoted by the same reference numeral as that in the above-described embodiment. In this configuration, a hole 310 is shorter in the radial direction than the hole 31, and the refrigerant hole 36 is not present on an extended line in the axial direction of the refrigerant path 12b on the inner side in the radial direction out of the refrigerant paths 12b. The refrigerant hole 36 is present on an extended line in the axial direction of the refrigerant path 12b on the outer side in the radial direction. Therefore, the refrigerant reached the end in the axial direction through the refrigerant paths 12a and 12b is discharged from the refrigerant hole 36 on the radially outer side.

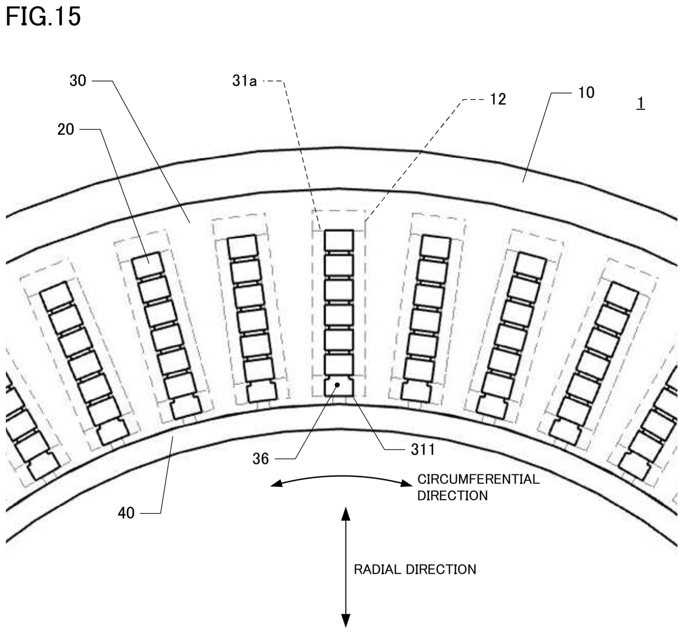

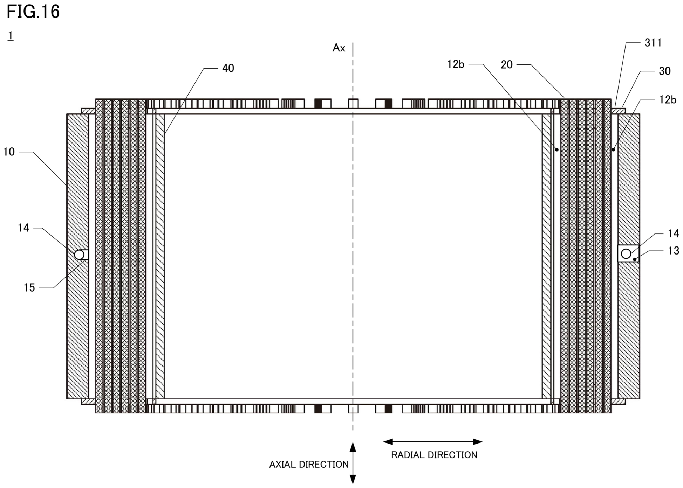

Fig. 15 illustrates an example of a configuration in which the refrigerant hole 36 is not formed on the radially outer side but is formed on the radially inner side in the end cover 30 as seen in the same direction as in Fig. 3, and Fig. 16 is a cross-sectional view similar to Fig. 6. In Figs. 15 and 16, the configuration similar to that of the above-described embodiment is denoted by the same reference numeral as that in the above-described embodiment. In this configuration, a hole 311 is shorter in the radial direction than the hole 31, and the refrigerant hole 36 is not present on an extended line in the axial direction of the refrigerant path 12b on the outer side in the radial direction out of the refrigerant paths 12b. The refrigerant hole 36 is present on an extended line in the axial direction of the refrigerant path 12b on the inner side in the radial direction. Therefore, the refrigerant reached the end in the axial direction through the refrigerant paths 12a and 12b is discharged from the refrigerant hole 36 on the radially inner side.

With the configuration illustrated in Figs. 13, 14, 15, and 16, both sides in the circumferential direction of the coil 20 and one side in the radial direction can be fixed by the end cover 30, so that the coil 20 can be more reliably positioned in the slot 12. Of course, in the example illustrated in Figs. 13, 14, 15, and 16, the penetrating portion 12d on the radially inner side of the slot 12 may be closed, and the inner peripheral cover 40 may be omitted.

Furthermore, the refrigerant path formed by fixing the coil 20 to the end cover 30 may be formed at any position in the radial direction or the circumferential direction of the coil 20. For example, in the configuration in which a surface in the circumferential direction of the coil 20 is fixed to the end cover 30, since the surface on which the coil 20 and the end cover 30 are in contact with each other is closed in the circumferential direction, the refrigerant path may be formed on at least one of the radially inner side and the radially outer side of the coil 20 and it is discharged from the hole of the end cover 30.

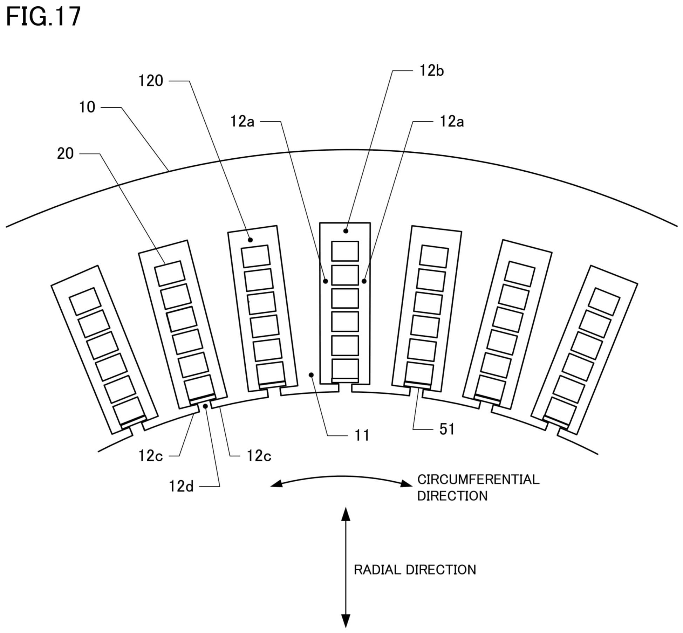

For example, as illustrated in Figs. 13 and 14, in the configuration in which the refrigerant hole 36 is formed on the radially outer side but the refrigerant hole 36 is not formed on the radially inner side in the end cover 30, a configuration in which the refrigerant path 12b is not formed on the radially inner side is also possible. Fig. 17 is a diagram illustrating an example of a configuration in which the coils 20 are gathered radially inward in a slot 120 as seen in the same direction as in Fig. 4.

In this example, a hole including a coil insertion hole 35 into which the coil 20 illustrated in Fig. 17 can be inserted and the refrigerant hole 36 present on the radially outer side is formed on the end cover 30. In this configuration, the refrigerant paths 12a are formed at both ends in the circumferential direction of the coil 20, the refrigerant path 12b is formed on the radially outer side, and the refrigerant passing through the refrigerant paths 12a and 12b is discharged through the refrigerant hole 36 of the end cover 30. Note that, in this configuration, an insulating member 51 is preferably arranged between the coil 20 on the radially inner side and the inner wall of the slot 12.

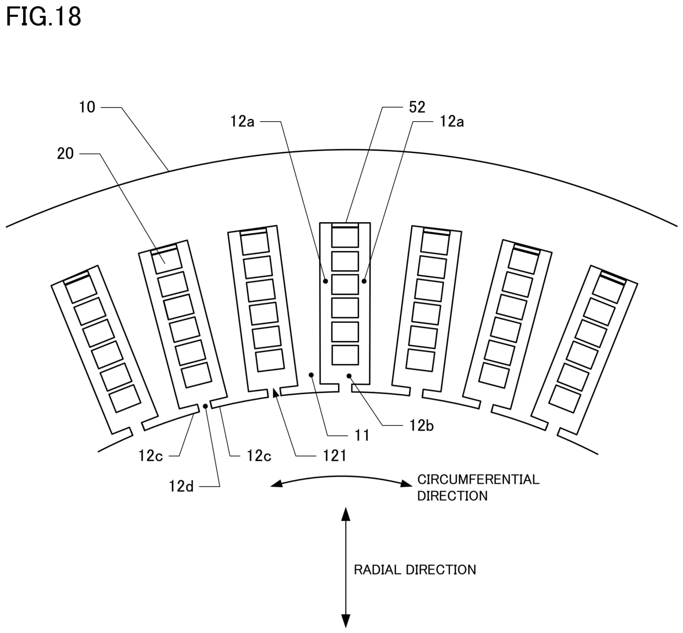

Fig. 18 is a diagram illustrating an example of a configuration in which the coils 20 are gathered radially outward in a slot 121 as seen in the same direction as in Fig. 4. In this example, a hole including a coil insertion hole 35 into which the coil 20 illustrated in Fig. 18 can be inserted and the refrigerant hole 36 present on the radially inner side is formed on the end cover 30. In this configuration, the refrigerant paths 12a are formed at both ends in the circumferential direction of the coil 20, the refrigerant path 12b is formed on the radially inner side, and the refrigerant passing through the refrigerant paths 12a and 12b is discharged through the refrigerant hole 36 of the end cover 30.

Note that, in this configuration, an insulating member 52 is preferably arranged between the coil 20 on the radially outer side and the inner wall of the slot 12. The refrigerant may be supplied into the slot 12 by various methods. For example, the supply port of the refrigerant may be installed at a position avoiding the surface on the radially outer side of the coil 20 on the radially outer side. In the configuration illustrated in Fig. 18, since the coil 20 present on the radially inner side where heat easily accumulates can be cooled by the refrigerant passing through the refrigerant path 12a, cooling can be efficiently performed.

It is sufficient that the stator core is an annular member including a plurality of teeth arranged in the circumferential direction and a plurality of slots formed between the teeth in the circumferential direction. That is, in the stator core, it is sufficient that a plurality of slots is formed by a plurality of teeth, and the coil is arranged in each slot. It is sufficient that the rotor is configured to be rotatable relative to the stator by an interaction between a magnetic field formed by the coil and a magnetic field formed by the rotor. In the stator core, the number of magnetic poles, the number of slots, a material and the like may have various configurations.

It is sufficient that the stator core is annular as a whole. Shapes of surfaces on the radially inner side and radially outer side of the ring formed by the stator core are not limited. For example, the surface on the radially outer side may have a circular shape or a polygonal shape as seen in the axial direction. The teeth are formed on the surface on the radially inner side, and the slots are formed between the teeth. In the stator core, a schematic shape including the teeth can be regarded as an annular shape, or a portion excluding the teeth can be regarded as an annular shape.

It is sufficient that the coil is arranged in the slot. A method for the shape and arrangement of the coil is not limited. Therefore, the coil may be wound around the teeth, or a segment coil may be inserted in the axial direction and joined at the end in the axial direction. The coil includes at least the accommodated portion accommodated in the slot and the coil end portion protruding in the axial direction from the end face of the stator core. The accommodated portion is a portion to be accommodated in the slot, and usually, a portion interposed between two end faces of the stator core in the axial direction in the slot is the accommodated portion. The coil is fixed to the end cover such that a gap is fixedly formed between the accommodated portion and the inner wall of the slot, whereby the refrigerant path is formed. In the coil end portion, a portion protruding in the axial direction from the end face of the stator core, that is, the coil present on the opposite side of the slot with respect to the end face of the stator core is the coil end portion.

It is sufficient that the end cover is a member attached to the axial end of the stator core. The end cover is a member attached for protecting or insulating the axial end of the stator core. It is sufficient that the end cover is present so as to protect at least a part of a portion other than the coil end portion at the axial end of the stator core, and a shape and a size thereof are not limited.

It is sufficient that the refrigerant path is a space that is formed between the coil and the slot and through which the refrigerant can flow. That is, it is sufficient that the refrigerant path is formed so that the refrigerant can flow in the axial direction. It is sufficient that the refrigerant path is a space that is fixedly formed by fixing the coil to the end cover so as not to move relative to the slot. Therefore, the cross section of the slot in the direction perpendicular to the axial direction is larger than the cross section of the coil arranged in the slot. The shape of the slot and the shape of the coil are not limited, and the position where the refrigerant path is formed is also not limited. Therefore, the configuration is not limited to the configuration formed over the entire periphery of the coil. The refrigerant path may be formed along one surface of the coil in the radial direction and the circumferential direction, or the refrigerant path may be formed along a plurality of surfaces.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A stator (1) comprising:
an annular stator core (10) including a plurality of teeth (11) arranged in a circumferential direction and a plurality of slots (12) formed between the teeth (11) in the circumferential direction;
a coil (20) arranged in a slot (12); and
an end cover (30) attached to an axial end of the stator core (10), wherein
the coil (20) is fixed to the end cover (30), and a refrigerant path (12a) that is a flow path of a refrigerant is formed between the coil (20) and the slot (12).

2. The stator (1) according to Claim 1, wherein
a coil insertion hole (35) through which the coil (20) is inserted and a refrigerant hole (36) through which the refrigerant is allowed to pass are formed on the end cover (30).

3. The stator (1) according to Claim 1 or 2, wherein
the refrigerant path (12a) is formed on at least one of a radially inner side and a radially outer side of the coil (20), and
a surface in a circumferential direction of the coil (20) is fixed to the end cover (30).

4. The stator (1) according to any one of Claims 1 to 3, wherein
the refrigerant path (12a) is formed over an entire periphery of the coil (20) in a plane perpendicular to an axial direction.

5. The stator (1) according to any one of Claims 1 to 4, wherein
the coil (20) and the end cover (30) are fixed by adhesion.

6. The stator (1) according to any one of Claims 1 to 5, wherein
the end cover (30) includes an engaging portion (31a) that extends to the stator core (10) side in the axial direction and engages with the slot (12).

7. The stator (1) according to any one of Claims 1 to 6, wherein
in each of the plurality of slots (12), a supply port of the refrigerant is formed at a center in the axial direction, and openings at both ends in the axial direction of the refrigerant path (12a) are discharge ports for the refrigerant supplied from the supply port.

8. The stator (1) according to any one of Claims 1 to 7, wherein
the slot (12) and the coil (20) are insulated from each other by an insulating member.

9. The stator (1) according to any one of Claims 1 to 8, wherein
a penetrating portion penetrating radially inward is formed in the slot (12),
the stator further comprising:
a cylindrical inner peripheral cover that is in contact with a surface on the radially inner side of the stator core (10) and closes the penetrating portion.

10. The stator (1) according to any one of Claims 1 to 9, wherein
the end cover (30) includes a protrusion located between the coils (20) adjacent in a radial direction.
